# FASCICULE DE BREVET EUROPEEN

(11) **EP 2 481 008 B1**
(45) Date de publication et mention de la délivrance du brevet: **25.03.2015**
(21) Numéro de dépôt: 10773119.2
(22) Date de dépôt: 15.09.2010
(51) Int. Cl.: G06K 7/00, G06K 7/08

(54) **DISPOSITIF POUR SYSTEME D'ACCES ET DEMARRAGE MAIN LIBRE DE VEHICULE**
VORRICHTUNG FÜR EIN KONTAKTFREIES ZUGANGS- UND STARTSYSTEM EINES FAHRZEUGES
DEVICE FOR VEHICLE HANDS-FREE ACCESS AND START SYSTEM

(30) Priorité: 25.09.2009 FR 0956668
(43) Date de publication de la demande: 01.08.2012
(73) Titulaire: Peugeot Citroën Automobiles SA, 78140 Vélizy Villacoublay (FR)
(72) Inventeur: FAGES-TAFANELLI, Reinald, 92170 Vanves (FR)
(86) Numéro de dépôt international: PCT/FR2010/051910
(87) Numéro de publication internationale: WO 2011/036375

(56) Documents cités:
- EP-A2- 0 370 278
- WO-A1-03/034085
- DE-A1-102006 061 298

## Description

L'invention concerne un dispositif pour système d'accès démarrage main libre de véhicule, notamment de véhicule automobile, comprenant un lecteur connecté à une bobine fixe dans laquelle une variation basse fréquence de courant est directement liée à une variation basse fréquence de flux magnétique traversant la bobine fixe.

De manière connue, un démarrage main libre est rendu possible en approchant un identifiant du lecteur. Une bobine mobile solidaire de l'identifiant module le champ magnétique basse fréquence en fonction d'un code qui lui est propre.

La courte portée du rayonnement d'un champ magnétique basse fréquence est avantageux en ce qu'il impose à l'utilisateur d'être dans le véhicule pour le démarrer en approchant l'identifiant du lecteur. Cette courte portée présente cependant aussi des inconvénients en terme de rendement de couplage fortement sensible à la distance et aux différents écrans électromagnétiques que peuvent constituer divers accessoires environnants.

On connaît déjà des moyens d'augmentation du rendement de couplage par rayonnement électromagnétique en canalisant une onde électromagnétique par un réflecteur. Ce type de moyens est par exemple décrit dans les documents US2008/0242331, US2008/0072423 et US2005/0077353. Une plaque en matériau électroconducteur réfléchit l'onde électromagnétique par annulation de la composante de champ électrique au niveau de la plaque. Les matériaux utilisés sont des matériaux à haute conductivité électrique tels que l'aluminium ou le cuivre. Le choix de tels matériaux n'est pas fondé uniquement sur 1a haute conductivité électrique mais aussi sur leur qualité amagnétique qui favorise la réflexion. Malheureusement, une canalisation des ondes par réflexion n'apporte un bon degré de satisfaction que dans le domaine des hautes fréquences.

La demande de brevet européenne EP0370278 A2 décrit un dispositif de fermeture à carte pour véhicule. Un lecteur comprend une fente pour recevoir la carte et un capteur muni d'une bobine encadrée par deux aimants.

La demande internationale WO03/034085 A1 décrit un transpondeur avec des concentrateurs de flux magnétique entourant la bobine du transpondeur.

De façon à remédier aux problèmes posés par l'état antérieur de la technique, l'invention a pour objet un dispositif pour système d'accès démarrage main libre de véhicule, comprenant un lecteur connecté à une bobine fixe dans laquelle une variation basse fréquence de courant est directement liée à une variation basse fréquence de flux magnétique traversant la bobine fixe, comprenant une plaque en matériau magnétique disposée à une distance juste suffisante de la bobine fixe pour permettre une introduction d'identifiant main libre comprenant une bobine mobile entre ladite plaque et la bobine fixe, et en ce que la ladite plaque est modelée par un processus de formage/pliage de façon à minimiser un parcours de champ magnétique dans ladite plaque.

Particulièrement, le matériau magnétique est un matériau ferreux.

Parmi différents modes de réalisation préférés, ladite plaque est intégrée à l'intérieur d'un logement du lecteur par clipsage, par bouterolage, sur glissières ou par un autre moyen de fixation simple et peu coûteux.

L'invention a aussi pour objet un véhicule automobile qui comprend un dispositif selon l'invention.

L'invention sera mieux comprise à la lecture de la description qui suit et à l'examen des figures qui l'accompagnent. Ces figures ne sont données qu'à titre illustratif et nullement limitatif de l'invention. Elles montrent :
- figure 1 : une représentation schématique d'un identifiant d'accès à démarrage main libre ;
- figure 2 : une représentation schématique d'application RFID ;
- figure 3 : une vue en perspective d'un système de démarrage main libre ;
- figure 4 : une configuration de lignes de champ magnétique en absence de l'invention ;
- figure 5 : une configuration de lignes de champ magnétique en présence de l'invention.

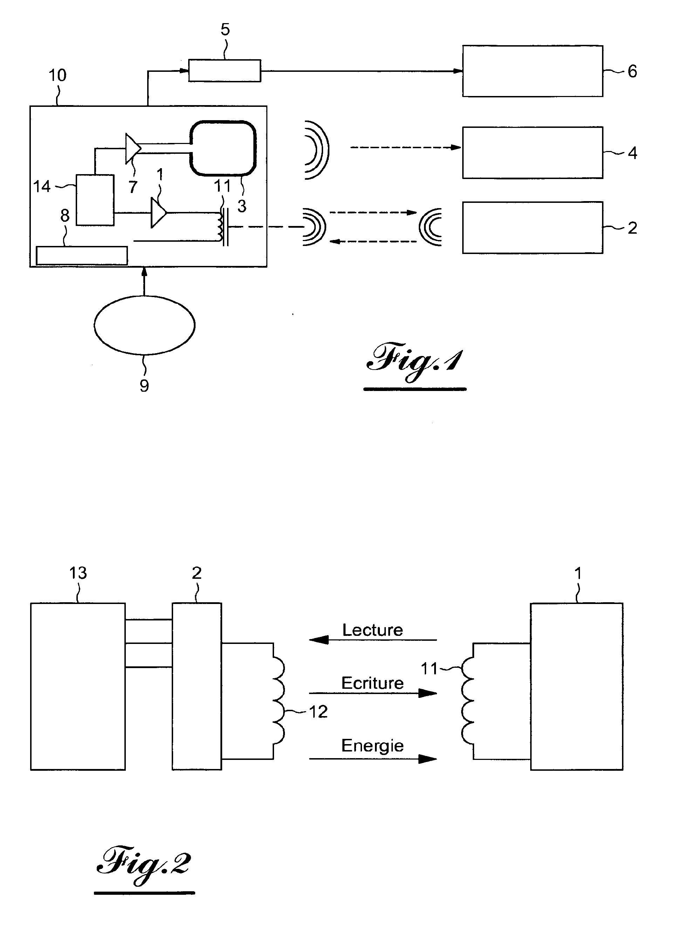

En référence à la figure 1, un identifiant ADML (Accès Démarrage Main Libre) est un élément émetteur de données dans un système électronique de transmission réception qui permet un contrôle d'accès et une commande à distance de fonctions de véhicule, notamment de véhicule automobile. Le contrôle d'accès et la commande comprennent généralement une fonction anti démarrage, l'ouverture/fermeture des ouvrants et différentes opérations qui précèdent ou qui succèdent à la conduite du véhicule. L'identifiant 10 comprend un composant électronique 14 permettant l'acquisition, le traitement et la modulation d'un signal à transmettre à un récepteur 4 pour la gestion des accès au véhicule. Le récepteur HF (Haute Fréquence) 4 est disposé dans le véhicule pour piloter divers accessoires ou actionneurs, tels que les verrous de portes, les feux clignotants ou autres. L'identifiant 10 constitue généralement une télécommande mobile que l'utilisateur tient facilement dans la main. Un émetteur HF 7 est couplé à une antenne 3 du type haute fréquence. L'antenne 3 émet une onde HF en fonction de commandes utilisateurs 9. L'identifiant 10 comprend aussi un transpondeur 1', encore appelé étiquette électronique ou étiquette radioélectrique pour piloter les applications RFId (Radio Frequency Identification) d'immobilisation du véhicule. Le transpondeur 1 est couplé à une antenne basse fréquence 11 pour émettre une onde basse fréquence (BF) vers un système RFId 2, disposé lui aussi à l'intérieur du véhicule.

Pour lutter contre le vandalisme, les fonctions RFId qui concernent l'identification par radiofréquence, sont renforcées par un cryptage des données de façon à autoriser et sécuriser les échanges entre calculateurs.

Un insert de clé 5 permet d'actionner mécaniquement les ouvrants en mode de sécurité ou le verrou d'inhibition du coussin de sécurité gonflable. La liaison entre l'insert de clé 5 et les verrous de portes ou l'inhibition du coussin gonflable 6, est de type mécanique.

La fonction BF transpondeur est assurée par un système transpondeur utilisant la technologie RFID de façon à assurer le démarrage du véhicule via un dialogue crypté. Ce système permet également de réaliser un apprentissage de clé via une ligne de requête de diagnostic.

Le système RFID est expliqué à présent plus en détails en référence à la figure 2.

Le lecteur 2 représente la partie fixe du dispositif généralement en haut de colonne de direction. Le lecteur 2 transmet à travers une antenne 12, comprenant généralement une bobine clippée sur l'antivol, un signal de fréquence déterminée vers le transpondeur 2 situé sur la télécommande. Le signal émis peut permettre l'écriture ainsi que la lecture de l'étiquette transpondeur.

Le transpondeur 1 représente la partie mobile qui équipe l'élément à identifier, à savoir la télécommande. Lorsque le transpondeur 1 est situé dans le champ de lecture du lecteur, il transmet en retour un signal. Ce signal est alors composé des informations permettant d'identifier le transpondeur 1, c'est-à-dire la télécommande, et donc d'autoriser le démarrage du véhicule. La communication entre le lecteur 2 et le transpondeur 1 se fait par voie hertzienne, tandis que la communication entre le lecteur 2 et un microprocesseur 13 qui traite les données du transpondeur, utilise une interface locale.

Le facteur de couplage entre l'antenne 12 reliée au lecteur 2 et l'antenne 11 reliée au transpondeur 1, est un critère primordial pour garantir le démarrage du véhicule dans le système de démarrage main libre ADML encore nommé clé électronique.

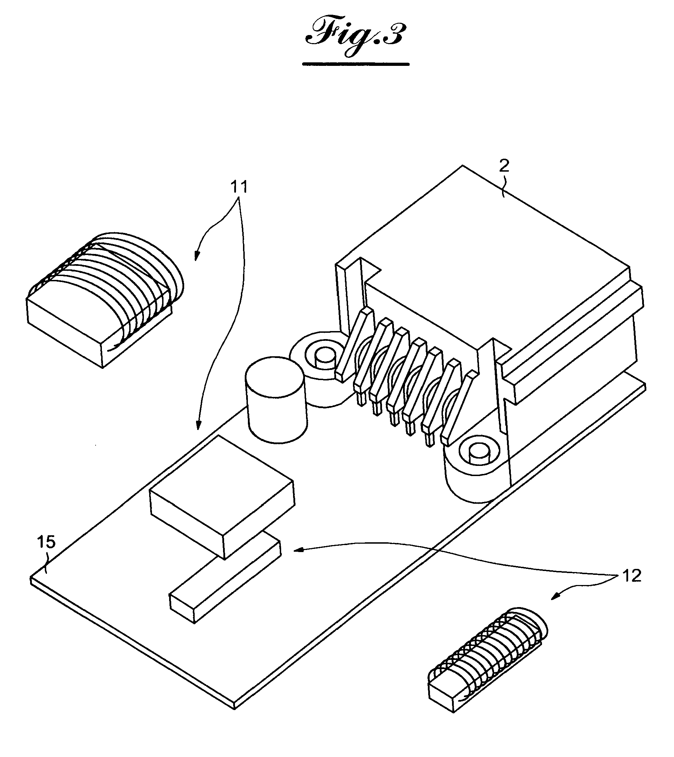

En référence à la figure 3, une bobine transpondeur 11 est située dans l'identifiant et une seconde bobine 12 est située sur une carte électronique 15 d'un lecteur de clé électronique sur laquelle est aussi monté le lecteur 2.

Lorsque la distance entre les deux bobines est trop grande, ou que des composants métalliques font écran au champ magnétique, par exemple une pile 8 d'alimentation de l'identifiant, le couplage transpondeur peut s'avérer insuffisant pour garantir un fonctionnement sans défaut du démarrage moteur.

Nous allons voir dans la suite de la description comment l'ajout d'un guide d'onde issu du formage pliage d'une plaque composée d'un matériau magnétique, par exemple du fer, permet de canaliser les lignes de champ magnétique et ainsi de maximiser le facteur de couplage qui permet d'obtenir un gain de l'ordre de 10 à 20% par rapport au facteur de couplage sans guide d'onde. Cette simple évolution interne au boîtier mécanique du lecteur, permet de compenser la trop faible marge de fonctionnement du système.

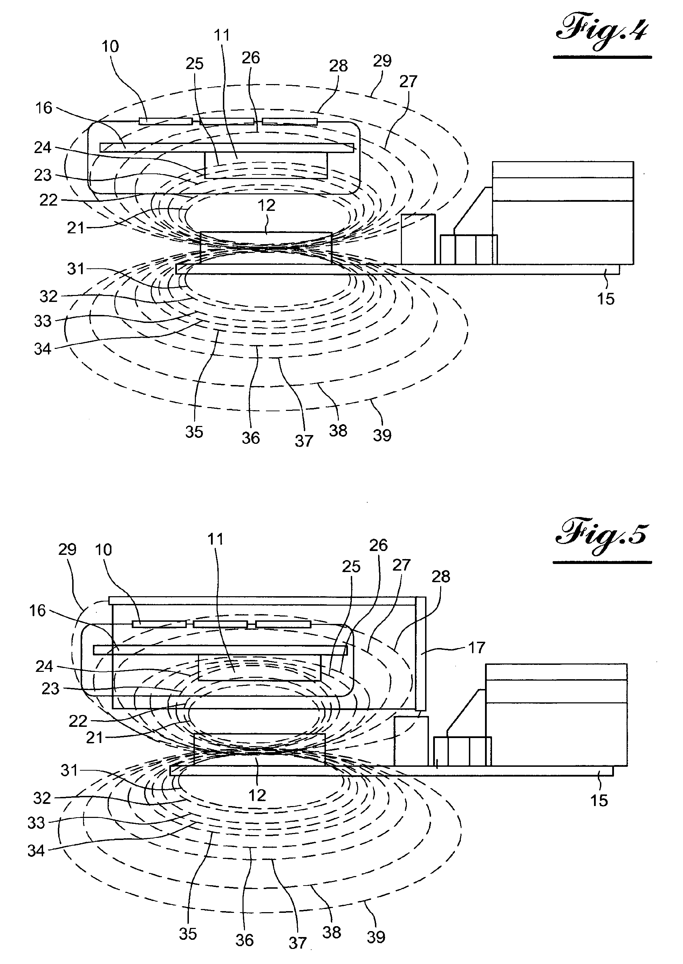

En référence à la figure 4, les lignes de champ magnétique 21 à 29, sont représentées dans une configuration sans guide de champ. Les lignes de champ magnétique créées par la bobine 12 se répartissent de façon sensiblement symétrique vers la partie supérieure et la partie inférieure de la carte électronique 15. Dans l'exemple illustré, on voit les lignes de champ 21 et 22 passer sous la bobine 11 pour se refermer dans la bobine 12. Les lignes 23, 24, 25, en passant à travers la bobine 11, induisent un courant dans la bobine 11 qui sera interprété par la carte électronique 16 de l'identifiant. Les lignes 26 à 29, en passant au-dessus de la bobine 11, ne provoquent aucun effet sur le courant induit et leur énergie ne peut donc être exploitée par l'identifiant 10. On note que la densité de ligne de champ magnétique s'amenuise au fur et à mesure que l'on s'éloigne de la bobine 12. Dans des cas limites où la distance entre la bobine 11 de l'identifiant et la bobine 12 du lecteur est trop grande, la communication peut devenir aléatoire et être source de pannes permanentes ou de fréquence élevée. Le facteur de couplage peut descendre jusque 1,5% en conformité avec les préconisations minimales des fournisseurs des systèmes ADML, il n'est pas satisfaisant.

Dans le système d'accès et démarrage main libre de véhicule représenté en figure 5, le dispositif comprend un lecteur 2 connecté à la bobine fixe 12 dans laquelle, comme dans l'exemple illustré par la figure 4, une variation basse fréquence de courant est directement liée à une variation basse fréquence de flux magnétique traversant la bobine fixe 12. De façon à guider les lignes de champ magnétique, le dispositif de la figure 5 comprend une plaque 17 en matériau magnétique disposée à une distance juste suffisante de la bobine fixe 12 pour permettre une introduction de l'identifiant main libre 10 avec sa bobine mobile 11 entre ladite plaque 17 et la bobine fixe 12.

Ainsi certaines des lignes de champ magnétique, comme par exemple la ligne 29 qui, en absence de plaque, se rebouclent à grande distance de la bobine, se referment à présent dans la plaque 17 qui constitue un guide de champ magnétique dont la propriété est de minimiser le parcours du champ magnétique dans la plaque dont la perméabilité magnétique est supérieure à celle de l'air.

Le parcours du champ magnétique sur la ligne 29 étant la somme du parcours dans l'air, avant d'atteindre une extrémité de la plaque et après en ressortir par une extrémité opposée, et du parcours dans la plaque, on a réduit le parcours de la ligne de champ magnétique 29 en pliant ou en formant la plaque 17 de façon à ce qu'une partie parallèle à l'axe de la bobine fixe 12 permet d'aplatir la ligne de champ 29 vers l'axe et à ce qu'une partie perpendiculaire rapproche une extrémité de la plaque de l'axe de la bobine, favorisant ainsi une diminution du parcours total.

Le choix du fer comme matériau magnétique, présente l'intérêt d'un matériau ferreux bon marché.

L'aplatissement de la ligne de champ magnétique 29 qui résulte de son guidage dans la plaque 17, a pour effet d'aplatir les lignes de champ magnétiques 21 à 28 qui se referment à l'intérieur de la boucle définie par la ligne de champ 29. L'aplatissement des lignes de champ magnétiques 21 à 28 a pour effet d'augmenter la densité des lignes de champ, et par conséquent du champ magnétique, dans l'espace qui sépare l'axe de la bobine 12 et la partie parallèle de la plaque 17.

Lorsque la bobine 11 disposée sur ou sous la carte électronique 16 de l'identifiant, est introduite dans l'espace mentionné ci-dessus, une quantité supérieure de lignes de champ 23, 24, 25, 26 passent dans la bobine 11, améliorant ainsi le rendement de couplage qui, selon des observations faites lors d'essais, est passé de 1,5% à 1,8%, c'est-à-dire au dessus des préconisations minimales des fournisseurs de système ADML.

Différentes formes possibles de la plaque 17, répondent aux critères qui viennent d'être énoncés. A titre d'exemples non exhaustifs, on peut citer une forme plane qui produit l'effet souhaité, une forme d'équerre qui améliore l'effet ou d'autres formes telles qu'une forme cylindrique dont les génératrices sont parallèles à l'axe de la bobine 12.

La plaque 17 peut être montée à faible coût dans un véhicule automobile en l'intégrant à l'intérieur du logement prévu sur le véhicule pour le lecteur 2 par un moyen simple de fixation tel que par clipsage, par bouterolage ou sur glissières.

## Revendications

1. Dispositif pour système d'accès démarrage main libre de véhicule, comprenant un lecteur (2) connecté à une bobine fixe (12) dans laquelle une variation basse fréquence de courant est directement liée à une variation basse fréquence de flux magnétique traversant la bobine fixe (12), **caractérisé en ce que** le lecteur comprend une plaque (17) en matériau magnétique disposée à une distance juste suffisante de la bobine fixe (12) pour permettre une introduction d'identifiant main libre comprenant une bobine mobile (11) entre ladite plaque (17) et la bobine fixe (12), et **en ce que** la ladite plaque (17) est modelée par un processus de formage/pliage de façon à minimiser le parcours du champ magnétique dans ladite plaque.

2. Dispositif selon la revendication 1, **caractérisé en ce que** le matériau magnétique est un matériau ferreux.

3. Dispositif selon l'une des revendications 1 ou 2, **caractérisé en ce que** ladite plaque (17) est intégrée à l'intérieur d'un logement du lecteur (2) par clipsage.

4. Dispositif selon l'une des revendications 1 ou 2, **caractérisé en ce que** ladite plaque (17) est intégrée à l'intérieur d'un logement du lecteur (2) par bouterolage.

5. Dispositif selon l'une des revendications 1 ou 2, **caractérisé en ce que** ladite plaque (17) est intégrée à l'intérieur d'un logement du lecteur (2) sur glissières.

6. Véhicule automobile, **caractérisé en ce qu'**il comprend un dispositif selon l'une des revendications 1 à 5.

## Patentansprüche

1. Vorrichtung für ein Freihand-Start-Zugangssystem eines Fahrzeugs, die eine Lesevorrichtung (2) aufweist, die mit einer stationären Spule (12) verbunden ist, in der eine niederfrequente Stromvariation direkt mit einer niederfrequenten Variation des Magnetstroms, der die stationäre Spule (12) durchquert, verbunden ist, **dadurch gekennzeichnet, dass** die Lesevorrichtung eine Platte (17) aus magnetischem Werkstoff aufweist, die in einer Entfernung von der stationären Spule (12) angeordnet ist, die gerade ausreicht, um eine Freihandeinführung eines Identifikators, der eine bewegliche Spule (11) aufweist, zwischen die Platte (17) und die stationäre Spule (12) zu erlauben, und dass die Platte (17) durch einen Form-/Faltprozess derart gestaltet wird, dass der Verlauf des Magnetfelds in der Platte minimiert ist.

2. Vorrichtung nach Anspruch 1, **dadurch gekennzeichnet, dass** der magnetische Werkstoff ein eisenhaltiger Werkstoff ist.

3. Vorrichtung nach einem der Ansprüche 1 oder 2, **dadurch gekennzeichnet, dass** die Platte (17) in das Innere einer Aufnahme der Lesevorrichtung (2) durch Clipsen integriert ist.

4. Vorrichtung nach einem der Ansprüche 1 oder 2, **dadurch gekennzeichnet, dass** die Platte (17) in das Innere einer Aufnahme der Lesevorrichtung (2) durch Döppern integriert ist.

5. Vorrichtung nach einem der Ansprüche 1 oder 2, **dadurch gekennzeichnet, dass** die Platte (17) in das Innere einer Aufnahme der Lesevorrichtung (2) auf Gleitführungen integriert ist.

6. Kraftfahrzeug, **dadurch gekennzeichnet, dass** es eine Vorrichtung nach einem der Ansprüche 1 bis 5 aufweist.

## Claims

1. A device for vehicle hands-free access start system, including a reader (2) connected to a stationary coil (12) in which a low-frequency current variation is directly linked to a low-frequency variation in magnetic flux passing through the stationary coil (12), **characterized in that** the reader includes a plate (17) of magnetic material placed at just enough distance from the stationary coil (12) so as to enable a hands-free identifier including a movable coil (11) to be inserted between said plate (17) and the stationary coil (12), and **in that** said plate (17) is modelled by a process of shaping/bending so as to minimize the path of the magnetic field in said plate.

2. The device according to Claim 1, **characterized in that** the magnetic material is a ferrous material.

3. The device according to one of Claims 1 or 2, **characterized in that** said plate (17) is integrated in the interior of a housing of the reader (2) by clipping.

4. The device according to one of Claims 1 or 2, **characterized in that** said plate (17) is integrated in the interior of a housing of the reader (2) by heading.

5. The device according to one of Claims 1 or 2, **characterized in that** said plate (17) is integrated in the interior of a housing of the reader (2) on slides.

6. A motor vehicle, **characterized in that** it includes a device according to one of Claims 1 to 5.
